# EUROPEAN PATENT SPECIFICATION

(11) **EP 2 833 661 B1**
(45) Date of publication and mention of the grant of the patent: **13.07.2016**
(21) Application number: 13178775.6
(22) Date of filing: 31.07.2013
(51) Int. Cl.: H04W 72/04, H04W 16/08

(54) **A method for limiting inter-cell interference and load balancing and a wireless communication system and base station**
Verfahren zur Begrenzung von Interferenzen zwischen Zellen und Lastausgleich und drahtloses Kommunikationssystem und Basisstation
Procédé pour limiter les interférences intercellulaires et pour équilibrage de charge, système de communication sans fil et station de base

(43) Date of publication of application: 04.02.2015
(73) Proprietor: FUJITSU LIMITED, Kawasaki-shi, Kanagawa 211-8588 (JP)
(72) Inventor: Li, Zhaojun, Guildford, Surrey GU3 2DJ (GB)
(74) Representative: Wilding, Frances Ward

(56) References cited:
- EP-A1- 2 291 043
- EP-A1- 2 640 142
- WO-A1-2013/025405
- WO-A2-2011/136519
- US-A1- 2011 310 830

## Description

The present invention relates to cellular wireless networks, more particularly to heterogeneous networks (HetNets). Examples of heterogeneous networks may be based on the 3GPP Long Term Evolution (LTE) and 3GPP LTE-A groups of standards, the IEEE 802.16 WiMAX standards or any other modern wireless cellular communication technology.

### Background of the Invention

Cellular wireless networks are widely known in which base stations (BSs) communicate with user equipments (UEs) (also called terminals, or subscriber or mobile stations) within range of the BSs.

The geographical areas covered by base stations are generally referred to as cells, and typically many BSs are provided in appropriate locations so as to form a network or system covering a wide geographical area more or less seamlessly with adjacent and/or overlapping cells. (In this specification, the terms "system" and "network" are used synonymously except where the context requires otherwise). In each cell, the available bandwidth is divided into individual resource allocations for the user equipments which it serves. The user equipments are generally mobile and therefore may move among the cells, prompting a need for handovers between the base stations of adjacent and/or overlapping cells. A user equipment may be in range of (i.e. able to detect signals from) several cells at the same time, and it is possible for a cell to be wholly contained within another larger cell.

### Basic LTE Network

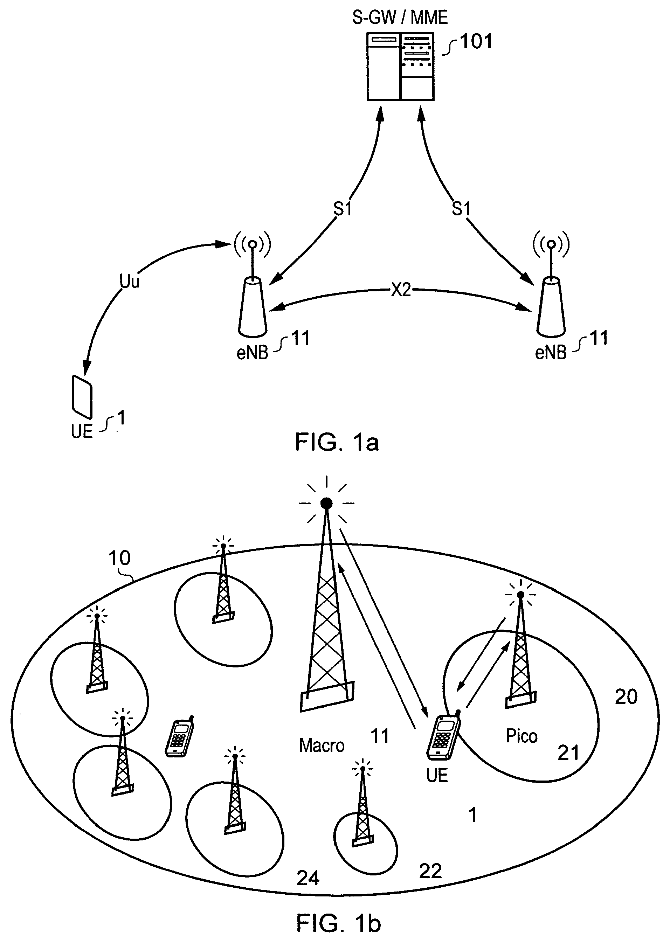

One type of cellular wireless network is based upon the set of standards referred to as Long-Term Evolution (LTE). The current version of the standard, Release 11, is also referred to as LTE-A (LTE-Advanced). The network topology in LTE is illustrated in Figure 1a. As can be seen, each terminal 1, called a UE in LTE, connects over a wireless link via a Uu interface to a base station in the form of an enhanced node-B or eNodeB 11. It should be noted that various types of eNodeB are possible. An eNodeB may support one or more cells at different carrier frequencies having differing transmit powers and different antenna configurations, and therefore providing coverage areas (cells) of differing sizes. Multiple eNodeBs deployed in a given geographical area constitute a wireless network called the the "E-UTRAN" (Evolved UMTS Terrestrial Radio Access Network) in LTE and generally referred to herein as "the network". The eNodeBs are connected to each other, and to higher-level nodes, by a backhaul network, e.g. the core network or Evolved Packet Core (EPC). The interface between eNodeBs is called the X2 interface.

Cells in an LTE network can operate either in a Time Division Duplex, TDD, mode in which the uplink and downlink are separated in time but use the same carrier frequency, or Frequency Division Duplex, FDD, in which the uplink and downlink occur simultaneously at different carrier frequencies.

Each eNodeB 11 in turn is connected by a (usually) wired link using an interface called S1 to higher-level or "core network" entities 101, including a Serving Gateway (S-GW), and a Mobility Management Entity (MME) for managing the system and sending control signalling to other nodes, particularly eNodeBs, in the network. In addition (not shown), a Packet Data Network (PDN) Gateway (P-GW) is present, separately or combined with the S-GW, to exchange data packets with any packet data network including the Internet. Thus, communication is possible between the LTE network and other networks.

### Small Cell Network (SCN) or Heterogeneous Network (HetNet)

Figure 1 a shows what is sometimes called a "homogeneous network"; that is, a network of base stations in a planned layout and which have similar transmit power levels, antenna patterns, receiver noise floors and similar backhaul connectivity to the core network. Current wireless cellular networks are typically deployed as homogeneous networks using a macro-centric planned process. The locations of the base stations are carefully decided by network planning, and the base station settings are properly configured to maximise the coverage and control the interference between base stations. However, it is widely assumed that future cellular wireless networks will more frequently adopt a "heterogeneous network" structure composed of two or more different kinds of cell, also (and henceforth) referred to as a HetNet or Small Cell Network SCN. At least one kind of cell provides basic network coverage to all users within the area covered by the network, and such cells may be referred to as basic coverage cells or Macro cells.

Figure 1b depicts an example of a simple HetNet. The large ellipse 10 represents the coverage area or footprint of a Macro cell provided by a base station (Macro BS) 11. Here we refer to a "base station" as an entity controlling at least one set of transmit and/or receive antennas and associated equipment at a given geographical location and typically supporting one or more cells. For the purposes of description, this is intended to be equivalent to an eNodeB in LTE (unless otherwise indicated, or the context demands otherwise).Thus a base station may control antennas, cells etc. at more than one Geographical site. Terms often used to describe a physical location where antennas are placed as "base station site" or "transmission point". Unless otherwise indicated it should be assumed that a single base station controls all the cells supported from a given transmission point. The smaller ellipses 20, 22 and 24 represent Small cells (or smaller cells) which have a smaller coverage area than the macro cell and are at least partially within the coverage area of Macro cell 10, each having a respective base station (exemplified by Pico BS 21). Here, the Macro cell is a cell providing basic "underlay" coverage in the network of a certain area, and the Small cells are overlaid over the Macro cell, using the same or different carrier frequencies for capacity boosting purposes particularly within so-called "hot spot zones". A UE 1 is able to communicate both with Macro BS 11 and Pico BS 21 (but not necessarily simultaneously) as indicated by the arrows in the Figure. When a UE starts to use a given cell for its communication, that cell is said to be "activated" for that UE, whether or not the cell is already in use by any other UEs. Incidentally, although the Macro and Small cells are depicted here as being provided by different base stations, this is not essential and the same base station may be responsible for both a Macro cell and a Small cell. For example, a cell operating in a higher frequency band is likely to experience greater pathloss, and thus have shorter range, than one in a lower frequency band; thus the same base station may provide both one or more lower-frequency Macro cells and one or more higher-frequency Small cells.

Although only two types of cell are shown in Figure 1b, various types of Small cell may be present in a SCN including (in decreasing order of size), cells similar to current Micro, Pico and Femto (or home eNodeB) cells. Femto and Pico cells can be overlaid on either Macro or Micro cells. Thus, networks can be designed such that the Macro cells provide blanket coverage while the Micro, Pico and/or Femto cells (or Small Cells) provide additional capacity. The envisaged Small Cells may also correspond to a New Carrier Type (NCT) not yet defined in LTE specifications.

Modem wireless communication systems such as LTE and LTE-A are hugely complex and a full description of their operation is beyond the scope of this specification. However, for assisting understanding of the inventive concepts to be described later, some outline will be given of some of the features of LTE which are of particular relevance in the present invention.

### OFDM and OFDMA

OFDM (Orthogonal Frequency Division Multiplexing) is one known technique for transmitting data in a wireless communication system. An OFDM-based communications scheme divides data symbols to be transmitted among a large number of subcarriers, hence the term frequency division multiplexing. Data is modulated onto a subcarrier by adjusting its phase, amplitude, or both phase and amplitude. The "orthogonal" part of the name OFDM refers to the fact that the spacings of the subcarriers in the frequency domain are specially chosen so as to be orthogonal, in a mathematical sense, to the other subcarriers. In other words, they are arranged along the frequency axis such that the sidebands of adjacent subcarriers are allowed to overlap but can still be received without inter-subcarrier interference.

When individual subcarriers or sets of subcarriers are assigned to different user equipments, the result is a multi-access system referred to as OFDMA (Orthogonal Frequency Division Multiple Access), as used in LTE and LTE-A for the downlink - in other words for communication from base stations to user equipments. By assigning distinct frequency/time resources to each user equipment in a cell, OFDMA can substantially avoid interference among the users served within a given cell.

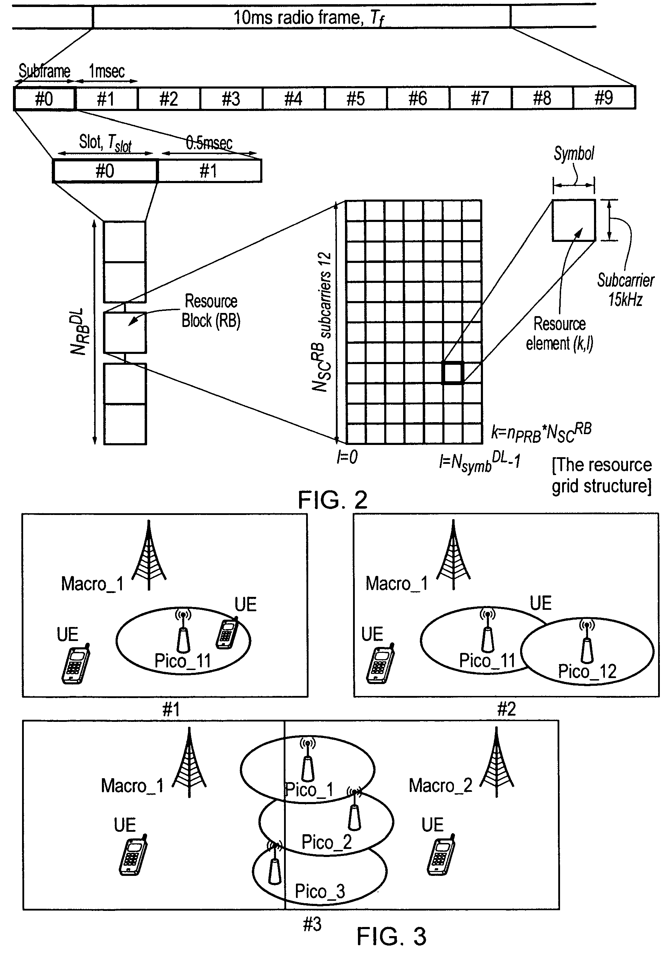

In OFDMA, users (called UEs in LTE) are allocated a specific number of subcarriers for a predetermined amount of time. An amount of resource consisting of a set number of subcarriers and OFDM symbols is referred to as a resource block (RB) in LTE. RBs thus have both a time and frequency dimension. Allocation of RBs is handled by a scheduling function at the base station (an eNodeB in an LTE-based system). A physical resource block (PRB) is the minimum unit of allocation in LTE, so each RB continues one or more PRBs. Figure 2 shows the resource grid structure in LTE with the basic resource elements which each have a 'width' of one symbol and a 'height' of one subcarrier. These resource elements are combined to form PRBs and RBs.

As mentioned above, in LTE, each eNodeB may have a plurality of antennas, and may serve multiple cells at the same or different frequencies simultaneously. Moreover, there may be distinct correspondingly uplink and downlink cells (in the remainder of this specification, the term "cell" can be assumed to mean at least a downlink cell).

### Frame Structure

In a wireless communication system such as LTE, data for transmission on the downlink is organised in OFDMA frames each divided into a number of sub-frames. Various frame types are possible and differ between FDD and TDD for example. Frames follow successively one immediately after the other, and each is given a system frame number (SFN). The frames are divided into subframes in a generic frame structure for LTE, applicable to the downlink, the 10 ms frame is divided into 20 equally sized slots of 0.5 ms. A sub-frame consists of two consecutive slots, so one radio frame contains 10 sub-frames, as shown in Figure 2.

### Inter-cell Interference Coordination (ICIC)

LTE is primarily designed for frequency reuse 1 (to maximize spectrum efficiency). This means that all the neighbour cells use the same frequency channels and that cell-planning does not deal with interference issues. There is thus a high probability that a resource block scheduled to a cell edge user is also transmitted by the neighbour cell, resulting in high interference.

Inter-cell interference coordination was introduced in 3GPP release 8 to deal with interference issues at cell edge. ICIC mitigates interference on traffic channels only and uses power and frequency domain control to mitigate cell-edge interference from neighbour cells. One ICIC scheme allows neighbour eNBs to use different sets of resource blocks throughout the cell at any given time. That is, two neighbour eNBs will not use the same resource assignments for their UEs. This greatly improves cell-edge SINR. The disadvantage is the resultant decrease in throughput throughout the cell, since the resources blocks are not being fully utilized.

In a second scheme, all the eNBs utilise the complete range of resource blocks for centrally located users but for cell-edge users, two neighbour eNBs will not use the same set of resource blocks at any given time.

In a third scheme, all the neighbour eNBs use different power schemes across the spectrum, but resource block assignment can be according to the second scheme. For example, an eNB can use power boost for cell edge users with specific set of resources (not used by neighbours), while keeping low signal power for center users with availability of all resource blocks. The X2 interface is used to share the information between the eNBs.

### Almost Blank Subframes (ABS)

LTE A (Release 10) introduced time-domain (evolved) intercell interference coordination (eICIC) via almost blank subframe (ABS) configurations which are subframes with reduced transmission power on some physical channels and/or reduced activity.

ABS bitmaps signalling ABS usage have the following periodicities:
- 40ms for FDD (corresponding to a 40-bit bitmap)
- 20ms for TDD configurations 1-5 (corresponding to a 20-bit bitmap)
- 40ms for FDD configuration 0 (corresponding to a 70-bit bitmap)
- 40ms for FDD configuration 6(corresponding to a 60-bit bitmap)

For example, in the case of FDD the ABS configuration is signalled to a UE with a 40-bit bitmap telling the UE which subframes on a 40-subframe periodicity the UE can implicitly assume will contain a significantly different level (e.g. lower level) of interference power from other cells. The UE can then generate independent CSI reports for ABS and non-ABS subframes, reflecting the different interference conditions. The following signals would still be present in an ABS, if they would be present in a normal subframe: CRS, synchronization signals, PBCH, paging, and, if configured, CSI-RS. However, PDSCH and other control channels may be removed or transmitted with lower power, so the UE can assume the subframe contains significantly less power than a non-ABS would. ABSs can be formed from normal subframes, or MBSFN subframes in which case only the CRS in the first OFDM symbol are transmitted. An MBSFN ABS is thus 'blanker' than a normal ABS.

ABS subframes, as currently defined in LTE, are intended to be to define resources with low transmitted power (i.e. low interference) from one or more non-serving cells. Their use can be to enable interference coordination in heterogeneous networks with cells of different sizes/transmit power to reduce limitations on a UE served by one cell due to interference from another cell. This would be typically exploited in LTE by one eNodeB (an "aggressor" base station") signalling to another eNodeB (a "victim" base station that is suffering interference from the aggressor base station) that certain subframes transmitted by a given cell can be assumed to be ABS, and therefore low interference levels can be expected in those subframes due to transmissions from that cell.

Thus the ABS scheme is available to enable one base station (usually a macro base station) to inform a neighbour base station (usually a pico base station) of its ABS pattern so that the neighbour base station can schedule transmission to the "victim" UEs (which is experiencing downlink interference from the macro base station) during the ABS period. An ABS status report function is available to aid the eNB designating ABS to evaluate the need for modification of the ABS pattern.

### Relative Narrowband Transmit Power Indicator, RNTP

RNTP is an information message that is sent to neighbour eNBs. It contains 1 bit per physical resource block (PRB) in the downlink, indicating if the transmission power on that PRB will be greater than a given threshold. Thus, neighbour eNBs can anticipate which bands are likely to suffer more severe interference and take the right scheduling decisions immediately rather than relying on the UEs' CQI reports only.

The RNTP mechanism can be used by one eNB to provide an indication on DL power restriction per PRB in a cell and other information for a neighbour eNB for interference aware scheduling.

ABS and RNTP schemes can be used in HetNet scenarios to improve the overall performance. Typically the macro eNB assigns RNTP on certain PRB(s) or ABS to the victim pico eNB(s) at the cost of the restriction of its own radio resource. It is likely that the same RNTP pattern or ABS pattern is assigned to all the victim small cells to limit the radio resource restriction in the macro cell.

EP 2 640 142 (citable under Article 54(3) EPC) discloses a method in which pico base stations indicate to a macro base station when an ABS subframe will not be used for pico cell transmission and macro cell data transmission in the subframe can then be carried out.

WO2013/025405 also describes communication of use information from a pico cell to a macro cell.

### Cell Range Expansion

As one of the key differentiators of LTE compared to previous generations of cellular systems, Self-Optimising Network (SON) functions are tools to derive the best performance in a cost-effective manner. The objective of SON load balancing is to distribute cell load evenly among cells or to transfer part of the traffic from congested cells. This is done by the means of self-optimisation of mobility parameters or handover actions. Support for mobility load balancing (MLB) consists of functions such as load reporting, handovers based on load balancing requirements and adapting handover or cell reselection configurations.

Cell range expansion (CRE), one typical interference limited deployment scenario, is a supported feature in LTE HetNets, where the coverage of a pico cell is expanded by adjusting handover triggering parameters so that UEs can be handed over earlier to the pico cell. In this case, an ICIC mechanism, such as ABS or RNTP, may be required in order to mitigate the interference from neighbour macro eNB(s) and thus guarantee the acceptable services provided by such pico cell to the UEs in CRE area.

It is desirable to enhance such mechanisms to improve the performance of the HetNet.

### Statements of Invention

According to an embodiment of one aspect of the invention there is provided a method for limiting inter-cell interference and balancing load in a wireless communication system, the method comprising one larger cell and two smaller cells providing overlapping terminal (or user equipment UE) coverage and capacity; the larger cell informing the two smaller cells of transmission resources in which the larger cell restricts its own transmission; and the two smaller cells using the restricted transmission resources for their own transmission; characterised by the two smaller cells communicating with each other to exchange use information about their usage of the restricted transmission resources in an overlapping area of the two smaller cells; and one or both of the smaller cells carrying out load balancing in response to the use information.

The overlapping coverage includes one larger cell (or more than one larger cell) and two smaller cells. The smaller cells communicate with each other to exchange use information about the restricted transmission resources in the overlapping area. For example, each smaller cell may have a sub-allocation of the (overall) restricted transmission resources in the area of overlap between the two smaller cells, to avoid interference. These original sub-allocations (division of the transmission resources between the two smaller cells) may be decided by the larger cell or pre-set by OAM for example.

The load balancing can be lead by the cell which sends the use information or by the cell which receives the use information, or even by a third cell. In any case it may request cooperation between the cells.

The transfer of use information can thus enhance inter-cell cooperation which is of benefit in SON functions, for example to distribute cell load appropriately between a larger cell and a smaller cell or between two smaller cells. Thus effective geographic coverage can be influenced to match capacity requirements.

The information may be used in MLB load reporting in interference limited scenarios to coordinate resource usage.

Invention embodiments are relevant to many scenarios in which there is at least one larger cell and two smaller cells in the wireless communication system. The larger cell may be a macro, basic coverage cell and smaller cells can be a micro, pico, femto or relay cell. Alternatively, the larger cell may be a micro cell for example and any of the smaller cells may be from one of the other cell categories that are smaller than the micro cells.

In one scenario there may be two overlapping larger cells, both of which may overlap with two smaller cells. In this scenario as well as the communication between the smaller cells in the system, there may also be communication between the two larger cells to harmonise their restricted transmission resources.

In any case, the larger cell may inform both the smaller cells of the restricted transmission resources available to the smaller cells for transmission. Preferably, the larger cell allocates the same restricted transmission resources to the smaller cells and thus informs them both of these restricted transmission resources. For example, the larger cell could inform two smaller cells of three blocks of shared restricted transmission resources (for use in the non-overlapped areas) and the division of the three blocks between the two smaller cells for the overlapping area may be pre-set or also signalled by the larger cell.

The use information may be any information relating to actual or potential use of the restricted transmission resources by the smaller cell providing the use information. For example the use information may include availability information about which parts of the restricted transmission resources are usable/available to each smaller cell in the overlapping area of two smaller cells. Thus one smaller cell may transmit its preference for future division between the smaller cells of the restricted transmission resources. Alternatively, it may transmit the actual restricted transmission resources available to it currently.

Additionally or alternatively, the use information may include load information about the current usage of the restricted transmission resources in the smaller cells. The load information may be in the form of the percentage of available restricted transmission resources used (either in an overlapping area, or in general or in both).

This load and usage status information is valuable information for MLB. The use information in the form of availability information or load information may trigger load balancing in the form of a redivision of the restricted transmission resources between the two smaller cells having an overlapping area.

Additionally or alternatively, the provision of the use information may trigger load balancing in the form of one or more handovers of UEs between the cells and/or an adjustment in the restricted transmission resources preferably in the overall size of the restricted transmission resources. The handover(s) may be between two smaller cells or between a smaller cell and a larger cell.

The restricted transmission resources may be provided by any suitable method, for example by limiting the time of transmission by the larger cell base station or the power of the transmission by the larger base station. In one embodiment, the restricted transmission resources are provided by Almost Blank Subframes. In another embodiment the restricted transmission resources may be in the form of Relative Narrowband Transmit Power RNTP schemes. For example, RNTP promises may be made for certain transmission resources. Of course a combination of both methodologies may be used.

If the restricted transmission resources are provided by an RNTP scheme, the availability information may be provided in the form of a pattern such as a Bitmap, with each position in the pattern identifying a Physical Resource Block PRB with a low RNTP in a subframe and whether the PRB is available to the smaller cell or not. A similar signalling scheme for ABS may provide identification of the ABS locations within a frame.

In an embodiment of a further aspect there is provided a wireless communication system comprising: one larger cell and two smaller cells providing overlapping terminal coverage and capacity; wherein the larger cell includes a transmitter arranged to transmit information to the two smaller cells about transmission resources in which it restricts its own transmission; and the two smaller cells each include a controller arranged to schedule their own transmission in the restricted transmission resources; characterised in that the two smaller cells are arranged to communicate with each other to exchange use information about their own use of restricted transmission resources; and one or both of the two smaller cells base station is arranged to carry out load balancing in cooperation with the other smaller cell or with the larger cell in response to the use information.

In an embodiment of a still further aspect there is provided a larger cell base station in a wireless communication system comprising the larger cell and two smaller cells providing overlapping terminal coverage and capacity; wherein the larger cell base station includes a transmitter arranged to transmit information to the two smaller cells about transmission resources in which it restricts its own transmission and in which the two smaller cells may schedule transmission; and characterised in that the larger cell base station includes a controller arranged to carry out load balancing in cooperation with one or both of the two smaller cells by adjusting the restricted transmission resources or effecting UE handover in response to use information about use of the restricted transmission resources exchanged between the two smaller cells.

In an embodiment of a still further aspect there is provided a smaller cell base station in a wireless communication system comprising one larger cell and two smaller cells providing overlapping terminal coverage and capacity; wherein the smaller cell base station includes a receiver arranged to receive information from the larger cell about transmission resources in which the larger cell restricts its own transmission; and the smaller cell base station includes a controller arranged to use the restricted transmission resources for its own transmission; characterised in that the smaller cell base station is arranged to communicate with the other smaller cell in the wireless communication system to exchange use information about their use of restricted transmission resources; and the smaller cell base station is arranged to carry out load balancing in cooperation with the other smaller cell and/or with the larger cell in response to the use information.

According to a computer program aspect there may be provided a computer program which when executed on processors (or controllers) of a wireless communication system carries out the method as defined in any of the previous described method aspects. A further computer program aspect may provide a computer program which when executed on a processor (or controller) of a base station causes it to function as defined in either of the base station aspects.

Features and sub-features of any of the different aspects of the invention may be freely combined. For example, preferred embodiments of the system (or base station) may be configured to incorporate functionality corresponding to one or more preferred features of the method aspect.

The invention can be implemented in computer hardware, firmware, software, or in combinations of them. The invention can be implemented as a computer program or computer program product, i.e., a computer program tangibly embodied in an information carrier, e.g., in a machine-readable storage device or in a propagated signal, for execution by, or to control the operation of, one or more hardware modules.

A computer program can be in the form of a computer program portion or more than one computer program and can be written in any form of programming language, including compiled or interpreted languages, and it can be deployed in any form, including as a stand-alone program or as a module, component, subroutine, or other unit suitable for use in a data processing environment. A computer program can be deployed to be executed on one module or on multiple modules at one site or distributed across multiple sites and interconnected by a communication network.

As is evident from the foregoing, embodiments of the present invention involve communications links between base stations and terminals (UEs) in a wireless communication system. The cells are associated with one or more base stations or relay stations. A base station or relay station may take any form suitable for providing such a communications link. It is envisaged that the base stations will typically take the form proposed for implementation in the 3GPP LTE and 3GPP LTE-A groups of standards, and may therefore be described as an eNodeB (eNodeB) (which term also embraces Home eNodeB) as appropriate in different situations. However, subject to the functional requirements of the invention, some or all base stations may take any other form suitable for transmitting and receiving signals from terminals.

Similarly, in the present invention, each terminal may take any form suitable for transmitting and receiving signals on communications links with base stations or relay stations. For example, the terminal may take the form of a user equipment (UE), subscriber station (SS), or a mobile station (MS), or any other suitable fixed-position or movable form. For the purpose of visualising the invention, it may be convenient to imagine the terminal as a mobile handset (and in many instances at least some of the terminals will comprise mobile handsets), however no limitation whatsoever is to be implied from this.

Method steps of the invention can be performed by one or more programmable processors executing a computer program to perform functions of the invention by operating on input data and generating output. Each processor may have one or more cores.

Processors suitable for the execution of a computer program include, by way of example, both general and special purpose microprocessors, and any one or more processors of any kind of digital or biological computer. Generally, a processor will receive instructions and data from a read-only memory or a random access memory or both. The essential elements of a computer are a processor for executing instructions coupled to one or more memory devices for storing instructions and data.

The invention is described in terms of particular embodiments. Other embodiments are within the scope of the following claims. For example, the steps of the invention can be performed in a different order and still achieve desirable results.

The apparatus according to preferred embodiments is described as configured, operable or arranged to carry out certain functions. This configuration or arrangement could be by use of hardware or middleware or any other suitable system. In preferred embodiments, the configuration or arrangement is by software.

The invention will now be described with reference to specific non-limiting embodiments as shown in the drawings, in which:
Figure 1 a is a schematic drawing of a networked topology in LTE
Figure 1b is a schematic representation of a HetNet;
Figure 2 is a schematic diagram of a resource grid structure
Figure 3 is a sketch of three different possible HetNet deployment scenarios;
Figure 4 is a flowchart of a general invention embodiment;
Figure 5 is a schematic representation of the structure of a macro or smaller cell base station;
Figure 6 is a schematic representation of example ABS resource usage; and
Figure 7 is a graph representation of example RNTP resource usage.

Figure 3 shows three possible HetNet deployments. The invention embodiments can operate in any of the arrangements shown in Figure 3. This figure shows macro cells and pico cells, but the skilled reader will appreciate that the same considerations apply to any two types of cell, one of which has a smaller coverage area fully (or partially) encompassed within the other, such as a micro cell and a smaller femto cell, pico cell or relay cell. The first scenario in Figure 3 (#1) is that of a single macro base station cell which surrounds a single pico cell. A user may be either within the coverage of the macro cell alone or within the "hotspot" defined by the pico cell in which case it may communicate with either the macro or the pico cell at any one time (unless carrier aggregation or other techniques for simultaneous communication are used).

In the second scenario (#2) there is a single macro cell which encompasses two pico cells. The pico cells overlap to some extent and thus there may be direct communication as well as interference between the two pico cells. A user may be able to receive transmissions from both pico cells as well as from the macro cell if the user is situated in the pico cell overlap.

In the third deployment scenario (#3) there are two overlapping macro cells and three pico cells provided on the overlap between the two macro cells. Thus a user may have several options as to which cell it should communicate with.

In all these HetNet deployment scenarios, CRE may be configured for the UEs, for example to allow the coverage of the pico cell(s) to be expanded using enhanced handover.

The principal scenario of interest in invention embodiments is an LTE HetNet in which UEs operate within the coverage of at least three cells: a larger cell (for example a macro cell) and two smaller cells (lower power node, e.g. a micro cell, a pico cell, a relay or a femto cell). The neighbouring eNodeBs are able to exchange information over the X2 interface, through which several procedures/functions can be executed/coordinated among them.

However, invention embodiments may also involve fewer cells, including a single small cell and/or a single larger cell, such as a macro cell.

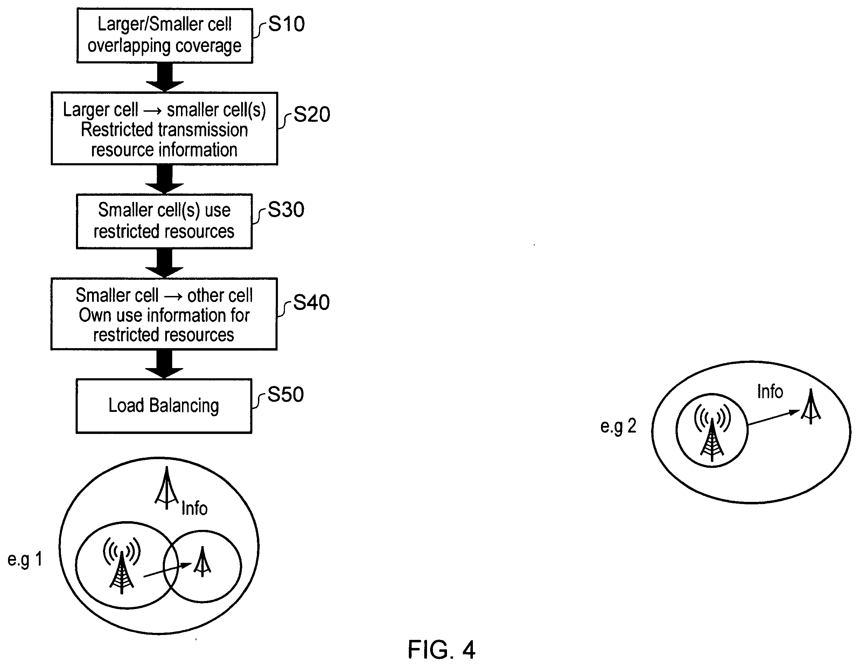

Figure 4 is a flowchart of a general invention embodiment showing the steps carried out. In step S10 overlapping coverage is provided by one or more larger macro (aggressor) cells and one or more smaller (victim) cells. In step S20 the or each larger cell communicates with the or each small cell about restricted transmission resources. Specifically it informs the or each smaller cell of transmission resources in which it is restricting its own transmission. In step S30 the smaller cell or cells then use the restricted resources for their own transmission.

In step S40 one of the smaller cells informs another cell of the wireless communication system of its own use of the restricted resources. In one example (e.g. 1) shown below step S50 the smaller cell sends information associated with its own use of the restricted resources to another smaller cell.

Moreover, although it is not shown, two or more smaller cells can (mutually) exchange information about their use of the restricted resources for coordination and adjustment purposes. It can be particularly advantageous to exchange information related to use of the restricted transmission resources in an overlapping area of two smaller cells, in which case each smaller cell is allocated a proportion of the usable transmission resources.

Thus, some embodiments of the invention enhance resource status reporting so that use information such as the availability and usage status of the resources designated as protected from inter-cell interference by an aggressor eNB can be exchanged among the victim eNBs. Such reports can be used by the neighbouring victim eNBs to coordinate the usage of such resources in order to avoid interference among them and maximise the resource efficiency.

In another example (e.g. 2) shown to the right of step S50 the smaller cell informs the larger cell of its own use information related to the restricted resources.

The usage status (also referred to as the load information) can be stated in percentage of resource blocks used within the available/usable restricted transmission resource. For example, in the case of ABS, the numerator of the percentage calculation can consist of the number of resource blocks within the ABS(s) in the usable ABSs in the overlapped area allocated by an eNB for UEs. The denominator of the percentage calculation can be the total quantity of resource blocks within the usable ABSs indicated in the overlapped area.

The availability can be signalled using bitmaps or other means of identifying the position of availability resources with the subframe.

In step S50, load balancing is carried out as a result of the use information communicated. For example there may be handover activity and/or a change in the overall restricted transmission resources and/or a re-sharing of restricted transmission resources in an overlap area between smaller cells.

In either example, this use information can thus be used to coordinate resource usages for interference cancellation/reduction purposes. Moreover, the information can be used in cell range expansion.

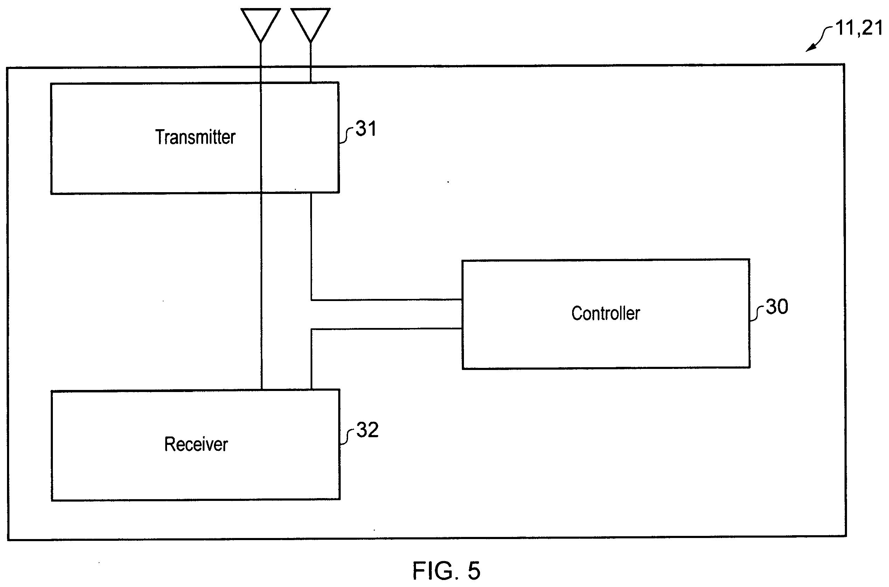

Figure 5 is a schematic diagram of a base station which may be either a macro base station or other larger cell base station 11 or a smaller cell base station 21. The base station includes many components of which only the parts particularly relevant to the invention are shown, for simplicity. These are a controller 30, a transmitter 31 and a receiver 32 (which may be formed as a single transceiver unit). A storage medium (not shown) may be linked to the controller and/or other components. In the case of a macro cell base station, the transmitter transmits information to one or more smaller cells about transmission resources in which it restricts its own transmission and thus in which the smaller cells may schedule their own transmission. The base station includes a receiver which can receive use information provided by the smaller cells or signalling related to/derived from this use information. Controller 30 adjusts the restriction of the transmission resources or is involved in a UE handover in response to receipt of the use information or a derivative thereof.

When the base station is acting as a smaller cell base station 21, receiver 32 receives information from the macro cell about transmission resources (for example in the form of time and frequency indications identifying subframes or blocks within subframes) in which the macro cell restricts its own transmission. The controller 30 controls the small cell base station to use the restricted transmission resources for its own transmission and to communicate with another smaller cell in the wireless communication system or with a macro cell to provide use information about this use of the restricted transmission resources. The controller 30 also carries out load balancing, preferably in conjunction with the cell to which it has communicated the use information.

We now turn to more specific embodiments.

In general, unless otherwise indicated, the embodiments described below are based on LTE, where the network operates using FDD or TDD and comprises one or more eNodeBs, each controlling one or more cells, at least one being a downlink cell with a corresponding uplink cell. Each cell may serve one or more terminals (UEs), independently or dependently, which may receive and decode signals transmitted in that serving cell.

Two scenarios are considered, as illustrated in Figure 3, where one or more small cells have only one macro neighbour cell, (e.g. the small cell(s) are located inside the coverage of the macro); and one or more small cell have multiple macro neighbour macro cells (e.g. the small cell(s) are located in the overlapped area of two macro cells). Analogous scenarios apply for other combinations of larger and smaller cells.

### Load reporting enhancements on available interference-proof ABS resources

A first detailed embodiment applies to both scenario #2 and #3 in Figure 3, where the aggressor eNB (Macro_1 in scenario #2; Macro_1 and Macro_2 in scenario #3) configures certain subframes as almost blank subframes for the victim eNBs (Pico_11 and Pico_12 in scenario #2; Pico_1, Pico_2 and Pico_3 in scenario #3) with reduced power on some physical channels and/or reduced activity. Messaging procedures signalling the availability of ABSs may be used in conformity with the LTE standards, for example according to Technical Specification TS36.423.

Embodiments of the invention focus on how to coordinate the usage of the usable resources in the overlapped area between two victim cells that are allocated such resource by a third aggressor cell (usually a big cell, e.g. macro or micro cell). Macro cells may be involved in the re-division procedures.

Typically the aggressor eNB allocates the same ABS pattern to all the victim eNBs; and a common subset for ABS patterns from multiple interfering cells (Macro_1 and Macro_2 in scenario #3) is ensured by OAM (Operation, Administration and Maintenance) configuration.

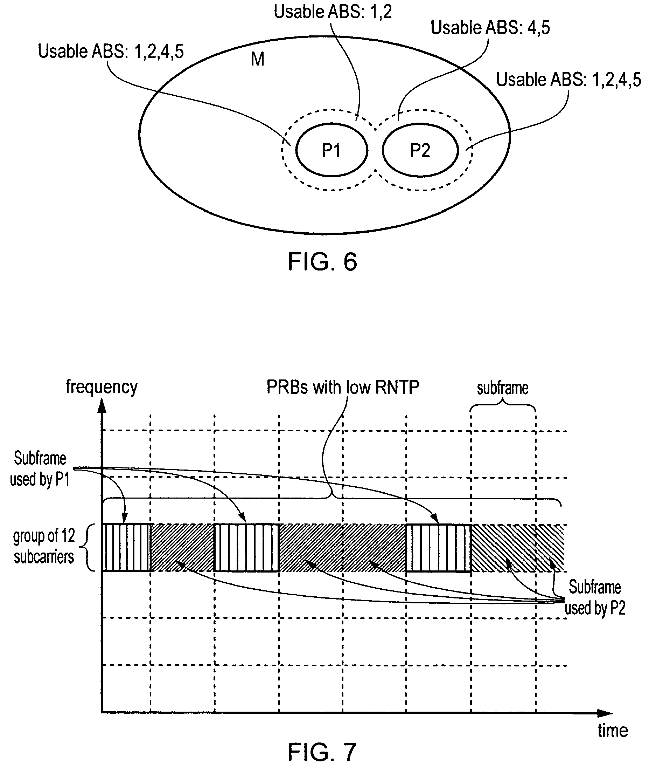

The victim eNBs that share the same ABS pattern (i.e. the interference-proof resources allocated by the aggressor eNB(s)) exchange messages to indicate the usage status of the ABS resources available at the border between two neighbouring cells. Figure 6 shows an example usage of ABS resource based scenario #2 in Figure 3, where the aggressor eNB configures the same ABS pattern (e.g. subframe 1, 2, 4, 5 as ABS) to both victim cells (P1 and P2). At the far end of both victim cells all ABS subframes (1, 2, 4 and 5) are usable as shown in the figure, while at the overlapping area between P1 and P2 due to the mutual interference only ABS 1 and 2 are usable in P1 and 4 and 5 in P2. This embodiment enables information exchanges on
- Usable ABS pattern in the overlapped area where the neighbour cells have to share the interference-proof resources; and/or
- The usage of the usable ABS resource in the overlapped area.

This information exchange allows the neighbour eNBs (possibly including the larger cell(s)) to carry out load balancing: 1) by negotiating the usable ABS pattern of the shared interference-proof resource based on the load condition in each neighbouring cell; 2) by initiating handover for load balancing purposes. As the results of the communication between the cells, the handover can be between the two smaller cells or between the macro cell and a smaller cell. Existing handover messages/procedures (for example as specified in 3GPP TS36.423) can be used for this purpose. For example, if P1 reports that more than 75% of the usable ABS resource has been used in the overlapped area while only 30% been used in P2, P2 may decide to release some of the shared ABS resource to P1 (e.g. P2 may not schedule any traffic on ABS 1 so that P1 can use it for scheduling its UEs.). If the overall load in P1 is also higher than P2, P1 may initiate handover procedure to offload some traffic to P2.

A second detailed embodiment applies to all three scenarios in Figure 3, where the macro eNB issues RNTP promises to the overlapped small cell(s) by configuring certain PRB(s) with low transmission power. Typically in the cases with multiple small cells in its coverage, the macro eNB allocates the same RNTP pattern to all the small cells.

Based on this embodiment, the small cell eNBs that share the same RNTP pattern (i.e. the interference-proof resources allocated by the macro eNB(s)) exchange messages to indicate the usage status of the RNTP resources available at the border between two neighbouring cells.

Figure 7 shows an example usage of RNTP resource based scenario #2 in Figure 3, in which the macro eNB configures the same RNTP pattern (e.g. certain PRBs with low Tx power) for use by both small cells (P1 and P2). At the far end of both cells all PRBs (throughout the subframes over time domain) are usable as shown, while at the overlapping area between P1 and P2 due to the mutual interference only the PRBs in some subframes are usable in P1 and P2 respectively as shown in Figure 7. This embodiment enables information exchanges on
- Usable RNTP pattern in the overlapped area where the neighbour cells have to share the interference-proof resources; and/or
- The usage of the usable RNTP resource in the overlapped area.

The RNTP pattern may be indicated by a string, for example a 40-bit string for FDD. The size of the bitmap may vary for TDD cases. each position in the bitmap representing a PRB with low RNTP in a subframe, for which value "1" indicates 'usable' and value "0" indicates 'non usable'. The first position of the RNTP pattern corresponds to subframe 0 in a radio frame where SFN = 0. This pattern is continuously repeated in all radio frames over the time domain.

The RNTP bitmap described above is used for the division of the restricted resources between two overlapped smaller cells. However, it is not the same as the one sent/allocated by the macro cell which relates to all the RNTP resources.

For example, a macro eNB may send DL power restriction (i.e. RNTP) per PRB in a cell to an overlapped small cell for interference aware scheduling. As specified in TS36.423, a RNTP perPRB bitmap defined as follow is used to exchange the information.

| | | |
|---|---|---|
| RNTP Per PRB | BIT STRING (6..110,...) | Each position in the bitmap represents a n^{PRB} value (i.e. first bit=PRB 0 and so on), for which the bit value represents RNTP (n^{PRB}). |
| | | Value 0 indicates "Tx not exceeding RNTP threshold". |
| | | Value 1 indicates "no promise on the Tx power is given. |

Based on this invention embodiment, a still further bitmap (relating to the radio frames) regarding the usage of the RNTP based restricted resources can be used to exchange information between two smaller cells both of whom have been allocated such resource by the macro eNB,

This information exchange (of availability and/or usage information) allows the neighbour eNBs, potentially in combination with the OAM settings and/or macro cell input to carry out load balancing, 1) by negotiating the usable RNTP pattern of the shared interference-proof resource based on the load condition in each neighbouring cell; 2) by initiating handover for load balancing purposes. For example, if P1 reports that more than 75% of the usable RNTP resource has been used in the overlapped area while only 30% been used in P2, P2 may decide to release some of the shared RNTP resource to P1 (e.g. P2 may not schedule any traffic on subframe 1 so that P1 can use it for scheduling its UEs.). If the overall load in P1 is also higher than P2, P1 may initiate handover procedure to offload some traffic to P2.

The division/re-division of RNTP resources can be done via different approaches. As one example, the OAM can provide the general guidance about how to divide the restricted resource between two overlapped small cells. Alternatively, one small cell can take the lead by providing its usage status to another small cell, which indicates its preference. Another example could be that the macro cell coordinates the usage between these two small cells.

In addition, in the case of scenario #1 in Figure 3 where there is only one victim small cell in the coverage of a macro cell, the use information is also beneficial. With the feedback from the victim cell about the RNTP or other resource usage status, the aggressor eNB, taking into account of the load status in the victim cell, may decide if more resource need to be allocated to the victim cell, or in case of low usage less protected resource may be allocated.

## Claims

1. A method for limiting inter-cell interference and balancing load in a wireless communication system, the method comprising:
one larger cell (10) and two smaller cells (20, 22, 24) providing overlapping terminal coverage and capacity;
the larger cell (10) informing the two smaller cells of transmission resources in which the larger cell restricts its own transmission;
the two smaller cells (20, 22, 24) using the restricted transmission resources for their own transmission; **characterised by**
the two smaller cells communicating with each other to exchange use information about their usage of the restricted transmission resources in an overlapping area of the two smaller cells; and
one or both of the smaller cells carrying out load balancing in response to the use information.

2. A method according to claim 1, wherein there are two overlapping larger cells, both also overlapping with the two smaller cells, and wherein the two larger cells also communicate to harmonise their restricted transmission resources.

3. A method according to claim 1 or 2, wherein in the overlapping area of the two overlapping smaller cells (20, 22, 24), the restricted transmission resources are divided between the two smaller cells.

4. A method according to any of the preceding claims, wherein the larger cell (10) informs both the smaller cells of the same restricted transmission resources, which are available to both smaller cells for transmission.

5. A method according to claim 3 or 4, wherein the use information includes availability information about which parts of the restricted transmission resources are available to each smaller cell (20, 22, 24) in the overlapping area.

6. A method according to any of the preceding claims, wherein the use information includes load information about the current usage of the restricted transmission resources in the two smaller cells.

7. A method according to claim 6, wherein the load information is in the form of a percentage of available restricted transmission resources used.

8. A method according to claim 5, 6 or 7, wherein the provision of availability information or load information triggers load balancing including a redivision of the restricted transmission resources between the two smaller cells (20, 22, 24).

9. A method according to any of the preceding claims, wherein the provision of use information triggers load balancing including one or more handovers of UEs (1) between the cells and/or an adjustment in the restricted transmission resources.

10. A method according to claim 9, wherein the adjustment in the restricted transmission resources is in the size of the restricted transmission resources.

11. A method according to any of the preceding claims, wherein the restricted transmission resources are provided by scheduled resource blocks with a limited transmission time and/or power of the larger cell, such as almost blank subframes ABS and/or resource blocks using a relative narrowband transmit power RNTP scheme.

12. A method according to claim 5, wherein the restricted transmission resources are provided by a relative narrowband transmit power RNTP scheme, and wherein the availability information is in the form of a pattern such as a bitmap, with each position in the pattern identifying a physical resource block PRB with low RNTP in a subframe and whether the PRB is available to the smaller cell or not.

13. A wireless communication system comprising:
one larger cell (10) and two smaller cells (20, 22, 24) providing overlapping terminal coverage and capacity; wherein
the larger cell includes a transmitter arranged to transmit information to the two smaller cells about transmission resources in which it restricts its own transmission;
the two smaller cells each include a controller arranged to schedule their own transmission in the restricted transmission resources; **characterised in that** the two smaller cells are arranged to communicate with each other to exchange use information about their own use of restricted transmission resources; and
one or both of the two smaller cells are arranged to carry out load balancing in response to the use information.

14. A larger cell base station (11) in a wireless communication system comprising the larger cell (10) and two smaller cells (20, 22, 24) providing overlapping terminal coverage and capacity; wherein
the larger cell base station includes a transmitter arranged to transmit information to the two smaller cells about transmission resources in which it restricts its own transmission and in which the two smaller cells may schedule transmission; and **characterised in that**
the larger cell base station includes a controller arranged to carry out load balancing in cooperation with one or both of the two smaller cells by adjusting the restricted transmission resources or effecting UE handover in response to use information about use of the restricted transmission resources exchanged between the two smaller cells.

15. A smaller cell base station (21) in a wireless communication system comprising one larger cell and two smaller cells (20, 22, 24) providing overlapping terminal coverage and capacity; wherein
the smaller cell base station includes a receiver arranged to receive information from the larger (10) cell about transmission resources in which the larger cell restricts its own transmission;
the smaller cell base station includes a controller arranged to use the restricted transmission resources for its own transmission; **characterised in that**
the smaller cell base station is arranged to communicate with the other smaller cell in the wireless communication system, to exchange use information about their use of restricted transmission resources; and
the smaller cell base station is arranged to carry out load balancing in cooperation with the other smaller cell and/or with the larger cell in response to the use information.

## Patentansprüche

1. Verfahren zum Begrenzen von Interferenzen zwischen Zellen und zum Ausgleichen von Belastung in einem drahtlosen Kommunikationssystem, wobei das Verfahren Folgendes umfasst:
eine größere Zelle (10) und zwei kleinere Zellen (20, 22, 24), die überlappende Endgeräteversorgung und - kapazität zur Verfügung stellen,
die größere Zelle (10) die beiden kleineren Zellen über Übertragungsressourcen informiert, wobei die größere Zelle ihre eigene Übertragung einschränkt;
die beiden kleineren Zellen (20, 22, 24) die eingeschränkten Übertragungsressourcen für ihre eigene Übertragung verwenden; **gekennzeichnet dadurch, dass**
die beiden kleineren Zellen miteinander kommunizieren, um Nutzungsinformationen über ihre Nutzung der eingeschränkten Übertragungsressourcen in einem überlappenden Bereich der beiden kleineren Zellen auszutauschen; und
eine oder beide der kleineren Zelle/n den Belastungsausgleich als Reaktion auf die Nutzungsinformationen ausführt/ausführen.

2. Verfahren nach Anspruch 1, wobei zwei überlappende größere Zellen vorhanden sind, die beide auch die zwei kleineren Zellen überlappen, und wobei die beiden größeren Zellen auch kommunizieren, um ihre eingeschränkten Übertragungsressourcen abzustimmen.

3. Verfahren nach Anspruch 1 oder 2, wobei in dem überlappenden Bereich der beiden überlappenden kleineren Zellen (20, 22, 24) die eingeschränkten Übertragungsressourcen unter den beiden kleineren Zellen aufgeteilt werden.

4. Verfahren nach einem der vorhergehenden Ansprüche, wobei die größere Zelle (10) die beiden kleineren Zellen über dieselben eingeschränkten Übertragungsressourcen informiert, welche für die beiden kleineren Zellen zur Übertragung verfügbar sind.

5. Verfahren nach Anspruch 3 oder 4, wobei die Nutzungsinformationen Verfügbarkeitsinformationen darüber aufweisen, welche Teile der eingeschränkten Übertragungsressourcen für jede kleinere Zelle (20, 22, 24) in dem überlappenden Bereich verfügbar sind.

6. Verfahren nach irgendeinem der vorhergehenden Ansprüche, wobei die Nutzungsinformationen Belastungsinformationen über die aktuelle Nutzung der eingeschränkten Übertragungsressourcen in den beiden kleineren Zellen aufweisen.

7. Verfahren nach Anspruch 6, wobei die Belastungsinformationen in Form eines Prozentsatzes der verfügbaren eingeschränkten Übertragungsressourcen, die genutzt werden, vorliegen.

8. Verfahren nach Anspruch 5, 6 oder 7, wobei das Bereitstellen von Verfügbarkeitsinformationen oder Belastungsinformationen den Belastungsausgleich einschließlich einer Neuaufteilung der eingeschränkten Übertragungsressourcen unter den beiden kleineren Zellen (20, 22, 24) auslöst.

9. Verfahren nach einem der vorhergehenden Ansprüche, wobei das Bereitstellen von Nutzungsinformationen den Belastungsausgleich einschließlich eines oder mehrerer Handover von UEs (1) unter den Zellen und/oder eine Anpassung in den eingeschränkten Übertragungsressourcen aufweist.

10. Verfahren nach Anspruch 9, wobei die Anpassung in den eingeschränkten Übertragungsressourcen als die Größe der eingeschränkten Übertragungsressourcen vorliegt.

11. Verfahren nach einem der vorhergehenden Ansprüche, wobei die eingeschränkten Übertragungsressourcen durch zeitlich geplante Ressourcenblöcke mit einer begrenzten Übertragungszeitdauer und/oder Leistung der größeren Zelle zur Verfügung gestellt werden, wie beispielsweise beinahe leere Teilrahmen, ABS (Almost Blank Subframes) und/oder Ressourcenblöcke, die ein relativ schmalbandiges Sendeleistungs RNTP (Relative Narrowband Transmit Power) -programm nutzen.

12. Verfahren nach Anspruch 5, wobei die eingeschränkten Übertragungsressourcen durch ein relativ schmalbandiges Sendeleistungs RNTP -programm zur Verfügung gestellt werden, und wobei die Verfügbarkeitsinformationen in der Form eines Musters, wie beispielsweise ein Bitmap, vorliegen, wobei jede Position in dem Muster einen physikalischen Ressourcenblock, PRB (Physical Resource Block) mit niedriger RNTP in einem Teilrahmen identifiziert und ob der PRB für die kleinere Zelle verfügbar ist oder nicht.

13. Drahtloses Kommunikationssystem, das Folgendes umfasst:
eine größere Zelle (10) und zwei kleinere Zellen (20, 22, 24), die überlappende Endgeräteversorgung und - kapazität zur Verfügung stellen; wobei
die größere Zelle einen Sender aufweist, der dazu angeordnet ist, Informationen an die beiden kleineren Zellen über die Übertragungsressourcen zu übertragen, wobei er seine eigene Übertragung einschränkt;
die beiden kleineren Zellen jede eine Steuerung aufweisen, die dazu angeordnet ist, deren eigene Übertragung in den eingeschränkten Übertragungsressourcen zeitlich zu planen; **dadurch gekennzeichnet, dass** die beiden kleineren Zellen dazu angeordnet sind, miteinander zu kommunizieren, um Nutzungsinformationen über deren eigene Nutzung von eingeschränkten Übertragungsressourcen auszutauschen; und
eine oder beide der kleineren Zellen dazu angeordnet ist/sind, den Belastungsausgleich als Reaktion auf die Nutzungsinformationen auszuführen.

14. Basisstation der größeren Zelle (11) in einem drahtlosen Kommunikationssystem, welche die größere Zelle (10) und zwei kleinere Zellen (20, 22, 24) umfasst, die überlappende Endgeräteversorgung und -kapazität zur Verfügung stellen; wobei
die Basisstation der größeren Zelle einen Sender aufweist, der dazu angeordnet ist, Informationen an die beiden kleineren Zellen über die Übertragungsressourcen zu übertragen, wobei sie ihre eigene Übertragung einschränkt, und wobei die beiden kleineren Zellen die Übertragung zeitlich planen können; und **dadurch gekennzeichnet, dass**
die Basisstation der größeren Zelle eine Steuerung aufweist, die dazu angeordnet ist, Belastungsausgleich in Kooperation mit einer oder beiden der beiden kleineren Zellen durch Anpassen der eingeschränkten Übertragungsressourcen auszuführen oder die UE-Übergabe als Reaktion auf die Nutzungsinformation über die Verwendung der eingeschränkten Übertragungsressourcen zu bewirken, die zwischen den beiden kleinere Zellen ausgetauscht werden.

15. Basisstation der kleineren Zelle (21) in einem drahtlosen Kommunikationssystem, die eine einzige größere Zelle und zwei kleinere Zellen (20, 22, 24) umfasst, die überlappende Endgeräteversorgung und - kapazität zur Verfügung stellt; wobei
die Basisstation der kleineren Zelle einen Empfänger aufweist, der dazu angeordnet ist, Informationen von der größeren (10) Zelle über die Übertragungsressourcen zu empfangen, wobei die größere Zelle ihre eigene Übertragung einschränkt;
die Basisstation der kleineren Zelle eine Steuerung aufweist, die dazu angeordnet ist, die eingeschränkten Übertragungsressourcen für ihre eigene Übertragung zu nutzen; **dadurch gekennzeichnet, dass**
die Basisstation der kleineren Zelle dazu angeordnet ist, mit der anderen kleineren Zelle in dem drahtlosen Kommunikationssystem zu kommunizieren, um Nutzungsinformationen über deren Nutzung von eingeschränkten Übertragungsressourcen auszutauschen; und
die Basisstation der kleineren Zelle dazu angeordnet ist, den Belastungsausgleich in Kooperation mit der anderen kleineren Zelle und/oder mit der größeren Zelle als Reaktion auf die Nutzungsinformationen auszuführen.

## Revendications

1. Procédé pour limiter une interférence intercellulaire et équilibrer la charge dans un système de communication sans fil, le procédé comprenant :
une cellule plus grande (10) et deux cellules plus petites (20, 22, 24) fournissant une couverture et une capacité superposées à un terminal ;
la cellule plus grande (10) informant les deux cellules plus petites des ressources de transmission dans lesquelles la cellule plus grande limite sa propre transmission ;
les deux cellules plus petites (20, 22, 24) utilisant les ressources de transmission limitées pour leur propre transmission ; **caractérisé en ce que**
les deux cellules plus petites communiquent l'une avec l'autre pour échanger des informations d'utilisation concernant leur utilisation des ressources de transmission limitées dans une zone de superposition des deux cellules plus petites ; et
l'une des cellules plus petites, ou les deux, effectuent un équilibrage de charge en réponse aux informations d'utilisation.

2. Procédé selon la revendication 1, dans lequel il y a deux cellules plus grandes se superposant, se superposant également toutes les deux avec les deux cellules plus petites, et dans lequel les deux cellules plus grandes communiquent également pour harmoniser leurs ressources de transmission limitées.

3. Procédé selon la revendication 1 ou 2, dans lequel, dans la zone de superposition des deux cellules plus petites (20, 22, 24) se superposant, les ressources de transmission limitées sont divisées entre les deux cellules plus petites.

4. Procédé selon l'une quelconque des revendications précédentes, dans lequel la cellule plus grande (10) informe les deux cellules plus petites des mêmes ressources de transmission limitées, qui sont disponibles pour les deux cellules plus petites pour une transmission.

5. Procédé selon la revendication 3 ou 4, dans lequel les informations d'utilisation comprennent des informations de disponibilité concernant les parties des ressources de transmission limitées qui sont disponibles pour chaque cellule plus petite (20, 22, 24) dans la zone de superposition.

6. Procédé selon l'une quelconque des revendications précédentes, dans lequel les informations d'utilisation comprennent des informations de charge concernant l'utilisation actuelle des ressources de transmission limitées dans les deux cellules plus petites.

7. Procédé selon la revendication 6, dans lequel les informations de charge sont sous la forme d'un pourcentage des ressources de transmission limitées disponibles utilisées.

8. Procédé selon la revendication 5, 6 ou 7, dans lequel la fourniture d'informations de disponibilité ou d'informations de charge déclenche un équilibre de charge comprenant une redivision des ressources de transmission limitées entre les deux cellules plus petites (20, 22, 24).

9. Procédé selon l'une quelconque des revendications précédentes, dans lequel la fourniture d'informations d'utilisation déclenche un équilibrage de charge comprenant un ou plusieurs transferts intercellulaires d'UE (1) entre les cellules et/ou un ajustement des ressources de transmission limitées.

10. Procédé selon la revendication 9, dans lequel l'ajustement des ressources de transmission limitées concerne la taille des ressources de transmission limitées.

11. Procédé selon l'une quelconque des revendications précédentes, dans lequel les ressources de transmission limitées sont fournies par des blocs de ressources programmés avec un temps et/ou une puissance de transmission limités de la cellule plus grande, tels que des sous-trames ABS (almost blank subframes) et/ou des blocs de ressources utilisant une méthode RNTP (relative narrowband transmit power).

12. Procédé selon la revendication 5, dans lequel les ressources de transmission limitées sont fournies par une méthode RNTP (relative narrowband transmit power), et dans lequel les informations de disponibilité sont sous la forme d'un motif tel qu'un bitmap, chaque position dans le motif identifiant un bloc PRB (physical resource block) avec une faible RNTP dans une sous-trame et si le PRB est disponible ou non pour la cellule plus petite.

13. Système de communication sans fil comprenant :
une cellule plus grande (10) et deux cellules plus petites (20, 22, 24) fournissant une couverture et une capacité superposées à un terminal ; dans lequel
la cellule plus grande comprend un émetteur agencé pour transmettre des informations de transmission aux deux cellules plus petites concernant les ressources de transmission dans lesquelles elle limite sa propre transmission ;
les deux cellules plus petites comprennent chacune un contrôleur agencé pour programmer leur propre transmission dans les ressources de transmission limitées ; **caractérisé en ce que**
les deux cellules plus petites sont agencées pour communiquer l'une avec l'autre pour échanger des informations d'utilisation concernant leur propre utilisation des ressources de transmission limitées ; et
l'une des cellules plus petites, ou les deux, sont agencées pour effectuer un équilibrage de charge en réponse aux informations d'utilisation.

14. Station de base de cellule plus grande (11) dans un système de communication sans fil comprenant la cellule plus grande (10) et deux cellules plus petites (20, 22, 24) fournissant une couverture et une capacité superposées à un terminal ; dans laquelle
la station de base de cellule plus grande comprend un émetteur agencé pour transmettre des informations aux deux cellules plus petites concernant les ressources de transmission dans lesquelles elle limite sa propre transmission et dans lesquelles les deux cellules plus petites peuvent programmer une transmission ; et **caractérisée en ce que**
la station de base de cellule plus grande comprend un contrôleur agencé pour effectuer un équilibrage de charge en coopération avec l'une des deux cellules plus petites ou les deux en ajustant les ressources de transmission limitées ou en effectuant un transfert intercellulaire d'UE en réponse aux informations d'utilisation concernant l'utilisation des ressources de transmission limitées échangées entre les deux cellules plus petites.

15. Station de base de cellule plus petite (21) dans un système de communication sans fil comprenant une cellule plus grande et deux cellules plus petites (20, 22, 24) fournissant une couverture et une capacité superposées à un terminal ; dans laquelle
la station de base de cellule plus petite comprend un récepteur agencé pour recevoir des informations de la cellule plus grande (10) concernant les ressources de transmission dans lesquelles la cellule plus grande limite sa propre transmission ;
la station de base de cellule plus petite comprend un contrôleur agencé pour utiliser les ressources de transmission limitées pour sa propre transmission ; **caractérisé en ce que**
la station de base de cellule plus petite est agencée pour communiquer avec l'autre cellule plus petite dans le système de communication sans fil, pour échanger des informations d'utilisation concernant leur utilisation des ressources de transmission limitées ; et
la station de base de cellule plus petite est agencée pour effectuer un équilibrage de charge en coopération avec l'autre cellule plus petite et/ou avec la cellule plus grande en réponse aux informations d'utilisation.
